# EUROPÄISCHE PATENTSCHRIFT

(11) **EP 3 848 341 B1**
(45) Veröffentlichungstag und Bekanntmachung des Hinweises auf die Patenterteilung: **06.03.2024**
(21) Anmeldenummer: 20150740.7
(22) Anmeldetag: 08.01.2020
(51) Int. Cl.: C05C 1/00, C05C 3/00, C05C 9/00, C05G 5/12

(54) **VERFAHREN UND VORRICHTUNG ZUR HERSTELLUNG EINES DÜNGEMITTELS**
METHOD AND APPARATUS FOR PRODUCING A FERTILISER
PROCÉDÉ ET DISPOSITIF DE FABRICATION D'UN ENGRAIS

(43) Veröffentlichungstag der Anmeldung: 14.07.2021
(73) Patentinhaber: thyssenkrupp Fertilizer Technology GmbH, 44141 Dortmund (DE); thyssenkrupp AG, 45143 Essen (DE)
(72) Erfinder: Franzrahe, Harald, 44289 Dortmund (DE)
(74) Vertreter: thyssenkrupp Intellectual Property GmbH

(56) Entgegenhaltungen:
- CN-A- 106 946 590
- CN-A- 108 911 798
- JP-A- H11 244 830
- TW-A- 201 112 944

## Beschreibung

Die Erfindung betrifft ein Verfahren und eine Vorrichtung zur Herstellung eines Düngemittels, welches Harnstoff und/oder wenigstens eine Ammoniumverbindung enthält, wobei im Herstellungsprozess Ammoniak als Verunreinigung anfällt.

Im Hinblick auf das weltweite Bevölkerungswachstum kommt der Entwicklung von flexiblen und effizienten Düngern eine große und wachsende Bedeutung zu. Dabei spielt nicht nur der Dünger selbst, d.h. die chemische Zusammensetzung, sondern auch die Verarbeitungen in transportfähige Gebinde und die Ausbringung auf das Feld eine Rolle. Die größte Bedeutung kommt hierbei sicherlich der Granulierung zu gleichmäßigen, in Größe und Beschaffenheit gleichen Partikeln, zu. Wichtige Parameter sind hierbei geringe Staubbildung, Festigkeit, niedrige Aggregationstendenz, homogene Größe, Lagerfähigkeit und Beständigkeit. Eine etablierte Granulationstechnik ist die Fließbettgranulation, welche gegenüber beispielsweise den Prill- und Pastilliertechniken, verbesserte Partikeleigenschaften aufweist.

Nahezu alle Düngemittel benötigen bei ihrer Herstellung in irgendeiner Form Ammoniak. Harnstoff ist das Diamid der Kohlensäure und wird industriell in einem Hochdruckverfahren aus Ammoniak und Kohlenstoffdioxid hergestellt. Andere Düngemittel sind Mischungen aus Ammoniak und Nitraten oder Kombinationen aus ammoniakhaltigen Verbindungen, beispielsweise Ammoniumsalzen, Phosphor und Kalium.

Ein sehr großer Anteil an der weltweiten Düngerproduktion entfällt auf harnstoffhaltigen Dünger. Dieser wasserlösliche Dünger zerfällt im Boden zu Ammoniumsalzen bzw. Nitraten und stellt einen wichtigen Basisdünger dar. Dieser harnstoffhaltige Dünger kann mit weiteren Elementen wie Kalium, Phosphaten oder Schwefelverbindungen kombiniert werden.

Bei allen vorgenannten Prozessen zur Herstellung von Düngemitteln wird in irgendeiner Form Ammoniak benötigt, insbesondere bei der Herstellung von festen Düngemittelgranulaten. Ammoniak kann während des Herstellungsprozesses freigegeben werden. Bei manchen Verfahren, insbesondere bei der Herstellung von harnstoffhaltigem Granulat, ist Ammoniak physikalisch in der Schmelze absorbiert oder es entsteht durch Polymerisationsreaktionen beispielsweise durch die Bildung von Biuret gemäß der nachfolgenden Gleichung:

(1) 2 NH₂-CO-NH₂ → H₂N-CO-NH-CO-NH₂ (Biuret) + NH₃

Viele Verfahren zur Herstellung von Düngemittelgranulat verwenden große Luftströme, zum Beispiel die Fließbettgranulation. Wenn das Ammoniak in den Luftstrom gelangt, muss es entfernt werden, um den heutigen Vorschriften betreffend die Emission von Anlagen, mittels derer große Mengen an anorganischen Verbindungen hergestellt werden, zu genügen.

Als Rohstoff bei der Granulation, insbesondere bei der Fließbettgranulation von Düngemitteln wird eine konzentrierte Harnstofflösung benötigt. Diese Lösung enthält in der Regel einen Anteil an gelöstem Ammoniak, insbesondere in der Größenordnung von etwa 500 ppm bis 800 ppm. Beim Granulieren wird dieses Ammoniak freigesetzt und gelangt in das Abgas des Granulators. Um die Ammoniakemissionsgrenzwerte einzuhalten, muss daher ein Ammoniakabgaswäscher eingesetzt werden. Dieser ist apparativ und energetisch sehr aufwändig und produziert eine wässrige Lösung eines Ammoniaksalzes. Diese Lösung muss entweder entsorgt oder aufbereitet werden. In manchen Fällen (z.B. bei Nitratdüngern) können die bei der Abgaswäsche anfallenden Ammoniumsalze in den Prozess zurückgeführt werden. Dies ist aber bei der Herstellung von harnstoffhaltigen Düngemittelgranulaten nicht oder nur in sehr begrenzter Menge möglich (siehe EP 2 362 863 B1). Wenn man den Anteil an Ammoniumsalzen im Produkt erhöht, führt dies bei harnstoffhaltigen Düngemittelgranulaten zu unerwünschten Produkteigenschaften, beispielsweise einer erhöhten Hygroskopizität (siehe EP 2 616 412 B2).

Weiterhin ist nachteilig, dass die Abgaswäscher zu einem Druckverlust führen und daher größere Ventilatoren für die Anlage notwendig sind, die einen höheren Stromverbrauch haben. Dies erhöht die Investitionskosten und die Betriebskosten einer Anlage zur Herstellung von Düngemittelgranulat. Verfahren zur Reduzierung der Ammoniakemissionen einer Harnstoffgranulationsanlage, bei denen das Ammoniak in einer sauren Waschlösung absorbiert und zu Ammoniumsulfat umgesetzt wird, werden beispielsweise in der WO 2010/060535 A1 beschrieben.

Andere im Stand der Technik angewandte Lösungsansätze sehen vor, das Ammoniak durch Strippen mit Kohlenstoffdioxid zu entfernen (siehe US 6,084,129 A).

Ein Verfahren und eine Vorrichtung zum Granulieren von Harnstoff in einem Fließbettgranulator sind beispielsweise aus der EP 0 900 589 B1 bekannt. Bei diesem Verfahren werden Keime von Harnstoffpartikeln in einen Granulator eingebracht und eine konzentrierte wässrige Harnstofflösung wird über Düsen auf diese Keime aufgesprüht. Der Granulator hat eine Bodenplatte mit einer Vielzahl von Öffnungen, durch die von unten her Fluidisierungsluft eingeblasen wird, so dass die Partikel im Reaktorraum des Granulators in einem fluidisierten Zustand gehalten werden. Durch das Aufsprühen der konzentrierten Harnstofflösung wachsen die Keime zu Granulatpartikeln mit einer gewünschten Partikelgröße an und werden aus dem Reaktorraum des Granulators ausgetragen.

Aus der US 4,416,748 A ist ein Verfahren zur Reduzierung von NOx in Rauchgasen bekannt, bei dem man das zu reinigende Gas mit Ammoniak mischt und die Mischung mit UV-Licht bestrahlt. Dabei werden durch Photolyse des Ammoniaks Aminoradikale (NH₂) erzeugt, die mit NOx reagieren, so dass inertes Stickstoffgas und N₂O entstehen. Dabei wird eine UV-Lampe außen an einem Rauchgaskanal angebracht, welcher ein für ultraviolette Strahlung durchlässiges Fenster aus Quarz aufweist. Dieses Dokument hat keinerlei Bezug zu Verfahren zur Herstellung von Düngemitteln auf Basis von Harnstoff oder anderer aus Ammoniak herstellbarer Substanzen. CN108911798 offenbart eine ökologische Toilette mit einem Abgasreinigungssystem. Menschliche Exkremente (welche Harnstoff enthalten) werden zu Dünger verarbeitet, wobei ein Abgasstrom, welcher Ammoniak enthält, unter UV-Strahlung photokatalytisch zersetzt wird.

CN106946590 offenbart einen Prozess zur Herstellung von organischem Dünger aus menschlichen Exkrementen. Es offenbart weiterhin, dass Ammoniak in einem Abgasstrom unter UV-Strahlung photokatalytisch zu Stickstoff und Wasser zersetzt wird.

TW201112944 offenbart einen Prozess zur Herstellung von organischem Dünger aus Exkrementen aus der Tierhaltung. Es offenbart weiterhin, dass Ammoniak in einem Abgasstrom unter UV-Strahlung photokatalytisch zersetzt wird und dass der organische Dünger granuliert werden kann.

JP H11 244830 offenbart die Verarbeitung von organischem Feststoffabfall in einem aeroben Fermentationsprozess. In diesem Prozess wird Ammoniak in einem Abgasstrom unter der UV-Strahlung einer UV-Lampe photokatalytisch zersetzt und das Endprodukt des Prozesses kann als organischer Dünger verwendet werden.

Die vorliegende Erfindung hat die Aufgabe, ein Verfahren zur Herstellung eines Düngemittels mit den eingangs genannten Merkmalen bereitzustellen, bei dem die Emissionen von Ammoniak reduziert werden, ohne dass der eigentliche Herstellungsprozess wesentlich verändert werden muss.

Die Aufgabe der Erfindung wird durch ein Verfahren zur Herstellung eines Düngemittels mit den Merkmalen gemäß Anspruch 1 gelöst. Vorteilhafte Ausgestaltungen ergeben sich aus den abhängigen Ansprüchen.

Gemäß einer bevorzugten Weiterbildung der vorliegenden Erfindung wird in einem Granulationsprozess ein Düngemittelgranulat hergestellt. Düngemittelgranulate haben wie bereits eingangs erwähnt wurde, im Vergleich zu Prills oder Pastillen einige vorteilhafte Partikeleigenschaften, weshalb die Herstellung von Düngemittelgranulat im Rahmen des erfindungsgemäßen Verfahrens bevorzugt ist.

Vorzugsweise bezieht sich die vorliegende Erfindung auf einen Granulationsprozess, bei dem ein harnstoffhaltiges Düngemittelgranulat hergestellt wird. "Harnstoffhaltig" bedeutet in diesem Zusammenhang, dass das Düngemittelgranulat Harnstoff enthält und daneben weitere aktive Düngemittelkomponenten enthalten sein können (beispielsweise Formaldehyd oder Schwefel) sowie geeignete Additive, die man beispielsweise für die Verbesserung der Granulateigenschaften, eine gezielte Freisetzung der Düngemittelkomponenten etc. verwendet.

Besonders bevorzugt wird gemäß der vorliegenden Erfindung das harnstoffhaltige Düngemittelgranulat durch Fließbettgranulation hergestellt. Die Fließbettgranulation ist ein vorteilhaftes bekanntes Verfahren für die Herstellung von Düngemittelgranulat, welches weiter unten im Detail noch näher erläutert wird.

Das erfindungsgemäße Verfahren sieht vor, das Ammoniak durch Bestrahlen mit UV-Strahlung photokatalytisch zu zersetzen. Durch die Photokatalyse werden die Ammoniakmoleküle zerstört und die daraus resultierenden Zersetzungsprodukte, insbesondere Stickstoff und Wasser, gegebenenfalls Nitritionen und Nitrationen sind nicht umweltschädlich und können ohne weiteres mit dem Abgas der Anlage in die Atmosphäre abgegeben werden oder über Abwasserströme entsorgt werden. Einige angenommene Mechanismen der photokatalytischen Zersetzungsreaktion von Ammoniak durch UV-Strahlung sind weiter unten angegeben.

Unter dem Begriff "Ammoniak" wird im Rahmen der vorliegenden Erfindung sowohl gasförmiges als auch gelöstes Ammoniak (NH₃) verstanden, als auch Ammoniak, welches in Form von Ammoniumionen (NH₄⁺) vorliegt. In wässriger Lösung besteht ein pH-abhängiges und temperaturabhängiges Gleichgewicht gemäß der nachfolgenden Gleichung:

(2) NH₃ + H₂O ↔ NH₄⁺ OH-

Oberhalb eines pH-Werts von 9,25 liegt NH₃ als dominante Form im Gleichgewicht vor, während bei pH-Werten unterhalb von 9,25 das Ammoniumion NH₄⁺ die dominante Form des gesamten Ammoniaks ist. Beide im Gleichgewicht gemäß obiger Gleichung vorliegenden Spezies sollen zur Vereinfachung erfindungsgemäß von dem Begriff "Ammoniak" erfasst sein.

Da das Ammoniak zu einem ganz überwiegenden Anteil nicht im Granulierprozess entsteht, sondern über die als Rohstoff verwendete konzentrierte Harnstofflösung, die gelöstes Ammoniak enthält, in den Prozess eingebracht wird, sieht der erfindungsgemäße Lösungsansatz vor, die Ammoniakkomponente vor der Granulierung zu entfernen.

Ein Vorteil der erfindungsgemäßen Lösung besteht darin, dass der sonst bei den bekannten Verfahren notwendige Ammoniakabgaswäscher nebst Zubehöreinrichtungen, welche bislang einen nicht unerheblichen Platzbedarf hatten, nunmehr gegebenenfalls entfallen können. Weiterhin ist vorteilhaft, dass bestehende Altanlagen, welche bisher ohne eine Ammoniakabgasreinigung betrieben wurden, vergleichsweise einfach mit den erfindungsgemäßen Einrichtungen zur photokatalytischen Zerstörung des Ammoniaks nachgerüstet werden können.

Anders als bei Anlagen zur Rauchgasentstickung (siehe beispielsweise oben erwähnte US 4,416,748 A), bei denen Stickoxide mit Ammoniak zu Stickstoff und Wasserdampf umgesetzt werden können, ist das Abgas einer Anlage zur Herstellung von Düngemittelgranulat nicht heiß, hat aber einen höheren Wassergehalt Der Abluftstrom ist gesättigt. Durch den hohen Wassergehalt wird die Photokatalyse eines Abgasstroms aus einer solchen Anlage nicht funktionieren. Da die Luft, die aus dem Granulator ausströmt, außerdem einen hohen Staubgehalt aufweist, würden die Stäube bei Einsatz einer UV-Lampe deren Strahlung absorbieren/streuen und die Effizienz und Lebensdauer der UV-Lampe reduzieren. Zur Entfernung der Stäube werden in modernen Anlagen zur Düngemittelproduktion Staubwäscher verwendet. Es gibt auch Anlagen, die zusätzliche mechanische Vorrichtungen zur Staubentfernung wie beispielsweise Zyklone oder Filtervorrichtungen einsetzen, um größere Mengen an Staub zu entfernen. Um jedoch die Emissionsgrenzen zu erreichen, müssen bei diesen Anlagen sekundäre Nasswäscher in der Staubsektion eingesetzt werden, um feine Staubpartikel und Aerosole zu entfernen.

In einer solchen Anlage könnte eine UV-Lampe grundsätzlich in der Staubsektion zwischen der Staubentfernungseinrichtung und dem Nasswäscher verwendet werden. Jedoch ist die Anordnung einer photokatalytischen UV-Einheit stromabwärts eines Nasswäschers nicht möglich, da sich die Absorptionsfrequenzen des Wassermoleküls und des Ammoniakmoleküls überlappen.. Folglich würde das Wasser die Effizienz einer photokatalytischen Zersetzung des Ammoniaks wesentlich reduzieren.

Die Luftleitungen, die zu den Wäschern hinführen, haben vergleichsweise große Durchmesser und die Verwendung einer photokatalytischen UV-Einheit in diesem Bereich würde eine erhebliche Anzahl an kostenaufwändigen UV-Lampen erfordern.

Eine bessere Methode, die eine kompaktere Bauweise ermöglicht, ist daher der gemäß einer bevorzugten Weiterbildung der Erfindung vorgesehene Lösungsansatz, bei dem man ein photokatalytisches UV-System in einem Bereich anordnet, der auf dem Förderweg zum Fließbettgranulator hin liegt, in dem die Düngemittelpartikel produziert werden.

Bei der Herstellung von Harnstoffgranulat wird eine Harnstoffschmelze oder eine konzentrierte Harnstofflösung benötigt. Bei einer Temperatur der Schmelze, die etwa im Bereich von 130 °C bis 140 °C liegt, absorbiert die Harnstoffschmelze physikalisch das Ammoniak. Bei bekannten Prozessen zur Herstellung von Harnstoffgranulat kann die Konzentration des Ammoniaks in der Schmelze beispielsweise etwa im Bereich von 500 ppm und etwa 800 ppm liegen. Da die Löslichkeit des Ammoniaks in festem Harnstoff recht niedrig ist und beispielsweise in der Größenordnung von etwa 50 ppm liegt, wird eine erhebliche Menge an Ammoniak während der Verfestigung des Harnstoffs freigesetzt und gelangt aus der Feststoffeinheit in das Abgas. Außerdem dimerisiert Harnstoff zu Biuret (siehe obige Reaktionsgleichung (1)), einer in diesem Herstellungsprozess unerwünschten Substanz. Bei dieser Reaktion wird zusätzliches Ammoniak freigesetzt. Wenn angestrebt wird, die Ammoniak-Konzentration in einer Harnstofflösung oder - schmelze zu verringern, muss man darauf achten, dass man nicht die Bildung von Biuret begünstigt, indem man durch die Entfernung von Ammoniak das Reaktionsgleichgewicht zu Gunsten des Biurets verschiebt. Hingegen ist der Anmelderin nicht bekannt, dass die Verwendung von UV-Strahlung in dem erfindungsgemäßen Verfahren die Polymerisation von Harnstoff begünstigt.

Im erfindungsgemäßen Verfahren wird in einer Harnstoffschmelze oder in einer konzentrierten Harnstofflösung gebundenes oder gelöstes Ammoniak photokatalytisch zerstört.

Alternativ oder zusätzlich dazu kann gemäß einer möglichen Variante der Erfindung in einem Abgasstrom enthaltenes Ammoniak photokatalytisch zerstört werden.

Besonders vorteilhaft ist es jedoch gemäß einer Weiterbildung des Verfahrens, wenn eine Harnstoffschmelze oder konzentrierte Harnstofflösung auf dem Transportweg zu einem Düngemittelgranulator mit UV-Strahlung bestrahlt wird. Da das Ammoniak sich gelöst in der Harnstoffschmelze oder konzentrierten Harnstofflösung befindet, ist es vorteilhaft, wenn die Zersetzung des Ammoniaks erfolgt, bevor die Harnstoffschmelze in den Granulator gelangt. Dort würde sonst auch aufgrund der im Granulator herrschenden erhöhten Temperaturen das Ammoniak aus der Schmelze ausgasen und somit in das Abgas des Granulators gelangen. Wie oben bereits ausgeführt wurde, ist die Zersetzung des Ammoniaks in einem Abgasstrom aus der Granulation schwieriger, da dieser Abgasstrom Stäube und Wasser enthält. Besonders bevorzugt erfolgt somit die Bestrahlung mit UV-Strahlung im Bereich einer Zufuhrleitung für Harnstoffschmelze oder konzentrierte Harnstofflösung stromaufwärts des Düngemittelgranulators.

Gemäß einer bevorzugten Weiterbildung der vorliegenden Erfindung wird insbesondere die Harnstoffschmelze oder konzentrierte Harnstofflösung in geringem räumlichen und/oder zeitlichen Abstand oder unmittelbar vor der Zugabe in den Düngemittelgranulator mit UV-Strahlung bestrahlt. Die für die Zufuhr der Harnstoffschmelze oder konzentrierten Harnstofflösung zum Düngemittelgranulator verwendete(n) Leitung(en) haben in der Regel einen nicht allzu großen Querschnitt, welcher so dimensioniert ist, dass man gegebenenfalls mit nur einer UV-Lampe oder in jedem Fall mit nur wenigen UV-Lampen eine Bestrahlung mit UV-Strahlung vornehmen kann, die den gesamten Querschnitt der Leitung beaufschlagt. Dies ermöglicht die Schaffung einer UV-Lampenanordnung, die kostengünstig ist und einen verhältnismäßig geringen apparativen Aufwand erfordert.

Unter UV-Strahlung versteht man generell den Strahlungsbereich, welcher kürzere Wellenlängen hat als sichtbares Licht. UV-Strahlung umfasst insgesamt den Wellenlängenbereich von 380 nm bis 100 nm. Im Rahmen des erfindungsgemäßen Verfahrens ist die Verwendung von UV-Strahlung mit Wellenlängen im Bereich von 170 nm bis 350 nm möglich. Bevorzugt ist jedoch die Verwendung von UV-Strahlung mit Wellenlängen, die kleiner sind als derjenige Bereich, in dem Wasser UV-Strahlung absorbiert, nämlich unterhalb von 290 nm, da Wasser im nahen UV-Bereich bei 290 bis 350 nm absorbiert. Bevorzugt ist die Verwendung von UV-Strahlung in einem Wellenlängenbereich, in dem das Ammoniak-Molekül UV-Strahlung stark absorbiert. Dies ist insbesondere im Bereich von 170 nm bis 315 nm der Fall, wobei die UV-Absorption von NH₃ ein Maximum etwa zwischen 190 nm und 195 nm zeigt. Beispielsweise verwendet man UV-Strahlung, deren Wellenlänge im Bereich von 185 nm bis 254 liegt. Für das erfindungsgemäße Verfahren geeignete UV-Lampen, die auf dem Markt erhältlich sind, geben beispielsweise weitgehend monochromatische UV-Strahlung im UV-C-Bereich bei etwa 254 nm oder etwa 185 nm ab.

Bevorzugt ist es im Rahmen des erfindungsgemäßen Verfahrens, wenn das Ammoniak photokatalytisch mittels UV-Strahlung zumindest überwiegend zu Stickstoff und Wasser zersetzt wird. Bei Bestrahlung von Ammoniak mit UV-Licht zersetzt sich das NH₃-Molekül durch Abspaltung eines H-Radikals in NH₂-Radikale (Aminoradikale).

In Gegenwart von Wassermolekülen entstehen bei Bestrahlung mit UV-Licht mit einer Wellenlänge von beispielsweise 253,7 nm zunächst durch Dissoziation Wasserstoffatome und OH-Radikale (OH·). Ammoniakmoleküle können mit den OH-Radikalen nach einem der nachfolgend wiedergegebenen Mechanismen reagieren:

NH₃+ OH· → NH₂ + H₂O

NH₂ + OH· → NH₂OH

NH₂OH → HNO → NO → N₂

oder

NH₃ + OH·→ NH₂OH + H⁺

NH₂OH + OH· → NO₂⁻ → NO₃⁻

Die oben angegebene erste Variante für den Mechanismus ist wahrscheinlicher, da bei Messungen nur vergleichsweise geringe Mengen an Nitrit- und Nitrationen gemessen werden.

Die Ammoniakmoleküle werden somit sukzessive oxidiert zu Hydroxylamin, Nitroxyl, Stickstoffmonoxid und schließlich reduziert zu gasförmigem Stickstoff.

Bei Bestrahlung mit UV-Strahlung bei Wellenlängen unterhalb von 280 nm tritt die Zersetzung von Ammoniak gemäß der nachfolgenden Reaktion auf:

NH₃ → ·NH₂ + H

Bei höheren Wellenlängen unterhalb von 311 nm tritt auch die Zersetzung von Ammoniak gemäß folgendem Mechanismus auf:

NH₃ → ·NH + H₂

Imidradikale (·NH) können mit Ammoniak zu Hydrazin reagieren:

·NH + NH₃ → N₂H₄

Zwei Imidradikale können zu Stickstoff und Wasserstoff kombinieren:

·NH + ·NH → N₂ + 2H

Zwei Aminoradikale können wiederum zu Hydrazin kombinieren:

·NH₂ + ·NH₂ → N₂H₄

Zwei Wasserstoffatome bilden ein Wasserstoffmolekül, so dass neben Stickstoff, Hydroxylamin und Hydrazin auch gasförmiger Wasserstoff anfallen könnte, der jedoch im Gemisch mit einem mehr als 1000-fach größeren Luftstrom ungefährlich ist und mit dem Abgas der Anlage ausgetragen werden könnte bzw. mit Luftsauerstoff zu Wasser reagiert.

Gemäß einer bevorzugten Weiterbildung der vorliegenden Erfindung erfolgt die Bestrahlung mittels einer UV-Lampenanordnung, umfassend vorzugsweise wenigstens eine UV-LED-Lampe, welche in räumlicher Nähe zu wenigstens einer Zufuhrleitung angeordnet ist, über die eine Harnstoffschmelze oder eine konzentrierte Harnstofflösung zum Düngemittelgranulator geleitet wird.

Nachfolgend wird eine allgemeine Beschreibung eines Fließbettgranulators angegeben, welcher beispielsweise für die Anwendung des erfindungsgemäßen Verfahrens in Betracht kommt. Diese Beschreibung dient dazu, das Verständnis der Fließbettgranulation zu erleichtern. Die nachfolgende Beschreibung eines Fließbettgranulators ist hingegen keineswegs so auszulegen, dass sie den Schutzumfang der vorliegenden Erfindung einschränkt. Im Rahmen der Erfindung können selbstverständlich anders aufgebaute Fließbettgranulatoren eingesetzt werden, ebenso wie andere Methoden für die Herstellung des Düngemittelgranulats im Rahmen der vorliegenden Erfindung in Betracht kommen. Ein typischer Fließbettgranulator, wie er in dem erfindungsgemäßen Verfahren zur Herstellung des harnstoffhaltigen Granulats verwendet werden kann, umfasst mindestens einen Granulatorinnenraum mit Granulatorinnenraumwänden. Die Granulatorinnenraumwände umfassen mindestens eine erste Granulatorseitenwand (bevorzugt als lange Seite des Fließbettgranulators), eine zweite Granulatorseitenwand (bevorzugt als lange Seite des Fließbettgranulators), eine Granulatorvorderwand (bevorzugt als kurze Seite bzw. Schmalseite) und eine Granulatorrückwand (bevorzugt als kurze Seite bzw. Schmalseite). Innerhalb des Granulatorinnenraums, bevorzugt horizontal oberhalb des Innenraumbodens, ist eine perforierte Platte angeordnet. Bevorzugt sind in, oberhalb oder auf der perforierten Platte angeordnete Sprühdüsen angebracht. Alternativ können die Sprühdüsen auch getrennt von der perforierten Platte, beispielsweise oberhalb der perforierten Platte oder seitlich im Granulatorraum (beispielsweise an den Granulatorseitenwänden), angeordnet sein. Die Sprühdüsen sind bevorzugt mit Atomisierungsgaszuleitungen und Schmelzezufuhrleitungen für die Zuführung der Harnstoffschmelze oder konzentrierten Harnstofflösung verbunden. Im Bereich dieser Schmelzezufuhrleitungen sind bevorzugt die UV-Lampen für die photokatalytische Zersetzung des Ammoniaks angeordnet, vorzugsweise in einem Bereich, welcher nicht allzu weit vor der Einbringung in den Granulator angeordnet ist.

Bei den vorgenannten Atomisierungsgaszuleitungen handelt es sich um Gaszuleitungen, welche zusammen mit der zu granulierenden Schmelze aus den Schmelzezufuhrleitungen in den Sprühdüsen fein verteilte Schmelzetröpfchen ("atomisierte" Tröpfchen) erzeugen. Der Ausdruck "Atomisierung" meint im Sinne der Erfindung nicht die Zerlegung oder Zersetzung der Schmelzetröpfchen in einzelne Atome, sondern vielmehr die Erzeugung von kleinen Schmelzetröpfchen, bevorzugt im Bereich von 1 bis 200 µm. Der Ausdruck "Schmelze" umfasst im Sinne der Erfindung konzentrierte Lösungen, Suspensionen, Emulsionen oder Dispersionen, bevorzugt mit einem Anteil der in der harnstoffhaltigen Schmelze zu lösenden Komponente von größer 0,5 Gew. %, bis 50 Gew. %, besonders bevorzugt kleiner 30 Gew. %.

Weiterhin weist ein Fließbettgranulator in der Regel eine oder mehrere Saatguteingangsöffnungen und eine oder mehrere Granulatausgangsöffnungen auf, wobei die Strecke zwischen der/den Saatguteingangsöffnung/-en und der/den Granulatausgangsöffnung/- en eine (gedachte) Granulat-Fließrichtung definiert. Der Ausdruck "Saatguteingangsöffnung" beschreibt eine oder mehrere Öffnungen bzw. Zuführungen über die kleinere (kleiner als die gewünschte Granulatgröße) Partikel als Saatgutpartikel (auch als Keime bezeichnet) in den Fließbettgranulator eingeführt werden. Über die Sprühdüsen werden die Saatgutpartikel mit Schmelzetröpfchen beaufschlagt. Durch diese Beaufschlagung wachsen die Saatgutpartikel kontinuierlich an ("accretion"). Bevorzugt erscheinen die Partikel auf mikroskopischer Ebene durch das Anwachsen "himbeerartig" bestehend aus einem Kern mit aufgeschmolzenen, erstarrten (kristallisierten) Tropfen.

Bevorzugt umfasst bei einem typischen Fließbettgranulator der Granulatorinnenraum eine Fluidisierungsgaszuleitung, sowie in oder auf der perforierten Platte angeordnete Sprühdüsen mit Zuleitungen für Schmelze und Zuleitungen für Atomisierungsgas. Die Zuleitungen für Schmelze und Zuleitungen für Atomisierungsgas können über einzelne oder zusammengefasste Zuleitungen erfolgen. Die Fluidisierungsgaszuleitung ermöglicht das Einbringen eines Luft- oder Gastromes, welcher von unten durch die perforierte Platte ein Fließbett aus Granulatpartikeln oberhalb der perforierten Platte erzeugt.

Die im erfindungsgemäßen Verfahren eingesetzte Harnstoffschmelze oder konzentrierte Harnstofflösung kann weitere Substanzen wie beispielsweise Ammoniumsulfat, elementaren Schwefel, Ammoniumnitrat, Spurenelemente, Granulierungsadditve, Emulgierungsadditive und oder Gemische davon enthalten. Zur Anwendung kommen demnach reine Harnstoffschmelzen oder Harnstofflösungen, bzw. reine Harnstoffschmelzen oder Harnstofflösungen mit einem Granulierungsadditiv wie beispielsweise Formaldehyd, Polyvinylamine, Polyethylenvinyle (z.B. Polyethylenamin), Polyethylenimine, Carbonsäuren und/oder Aldehyde.

Gegenstand der vorliegenden Erfindung ist weiterhin eine Vorrichtung zur Herstellung von Düngemittelpartikeln, welche Harnstoff und/oder wenigstens eine Ammoniumverbindung enthalten, insbesondere von Düngemittelgranulat, vorzugsweise nach dem oben beschriebenen Verfahren, umfassend einen Anlagenteil mit einem Arbeitsraum, insbesondere einen Düngemittelgranulator, in dem die Herstellung der Düngemittelpartikel erfolgt und mindestens eine Zufuhrleitung zu dem Anlagenteil, mittels derer eine Harnstoffschmelze oder eine konzentrierte Harnstofflösung zu dem Anlagenteil leitbar ist, wobei erfindungsgemäß wenigstens eine UV-Lampenanordnung in räumlicher Nähe zu wenigstens einer Zufuhrleitung angeordnet ist, mittels derer die in der Zufuhrleitung strömende Harnstoffschmelze oder konzentrierte Harnstofflösung mit UV-Strahlung bestrahlt wird.

Eine bevorzugte Weiterbildung der Erfindung sieht vor, dass die UV-Lampenanordnung mindestens eine UV-LED-Lampe umfasst. Geeignete UV-LED-Lampen sind am Markt erhältlich und zeichnen sich durch eine kompakte Bauweise und vergleichsweise niedrigen Energieverbrauch aus, so dass sie in dem erfindungsgemäßen Verfahren effektiv und kostengünstig eingesetzt werden können.

Vorzugsweise ist die Zufuhrleitung wenigstens in dem Bereich, in dem die UV-Lampenanordnung angeordnet ist, für UV-Strahlung durchlässig ausgebildet. Die UV-Strahlung kann somit durch die Leitungswandung in das Innere der Leitung gelangen und das in der dort strömenden Harnstoffschmelze oder konzentrierten Harnstofflösung enthaltene Ammoniak zersetzen. Der Begriff "durchlässig" ist in diesem Zusammenhang so zu verstehen, dass die von der UV-Lampe abgegebene UV-Strahlung nicht oder nur zu einem möglichst geringen Anteil absorbiert oder gestreut wird, so dass ein hoher Wirkungsgrad erzielt wird.

Beispielsweise kann man dies konstruktiv so lösen, dass die Zufuhrleitung in dem Bereich, in dem die UV-Lampenanordnung angeordnet ist, ein für UV-Strahlung durchlässiges Fenster aufweist. Zumindest in diesem Bereich des Fensters besteht somit die Leitung aus einem für die UV-Strahlung in einem ausreichenden Umfang durchlässigen Material, so dass durch die Leitungswandung keine Strahlung oder nur ein geringer Anteil der Strahlung absorbiert wird und der wesentliche Anteil der Strahlung durch die Leitungswandung in das Leitungsinnere gelangt.

Beispielsweise könnte man als für UV-Strahlung durchlässiges Fenster industrieübliche "Schaugläser" verwenden. Diese dienen in der Regel zur optischen Durchflusskontrolle. Diese Schaugläser können beidseitig mit druck- und korrosionsbeständigen Gläsern versehen sein, wobei an einer Seite eine UV-Lampe angeordnet ist. Bei dieser Anwendung könnte vorzugsweise das Glas im Bereich gegenüber der UV-Lampe verspiegelt werden, damit die UV-Strahlung reflektiert wird. Dadurch erhöht sich die Strahlungsintensität.

Die Erfindung wird im Folgenden anhand eines Ausführungsbeispiels unter Bezugnahme auf die Zeichnung näher beschrieben. Die Zeichnung ist nicht maßstabsgetreu und schränkt die Erfindung nicht auf die dort gezeigten Ausführungen ein. Dabei zeigt:
Figur 1 eine vereinfachte schematische Darstellung eines Verfahrens zur Granulation eines insbesondere harnstoffhaltigen Düngemittelgranulats gemäß einem Ausführungsbeispiel der vorliegenden Erfindung;
Figur 2 eine schematische vergrößerte Detailansicht der Zufuhrleitung für Harnstoffschmelze im Bereich der UV-Lampe im teilweisen Längsschnitt.

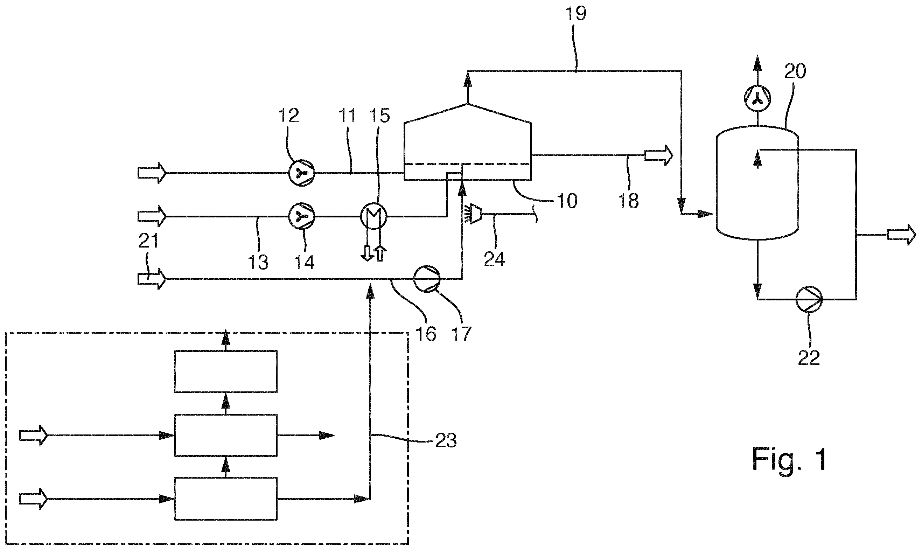

Nachfolgend wird auf die Figur 1 Bezug genommen. Die Darstellung ist stark schematisch vereinfacht und es sind nur diejenigen funktionellen Baueinheiten der Anlage zur Herstellung von Düngemittelgranulat dargestellt, die im Rahmen des erfindungsgemäßen Verfahrens von Bedeutung sind. Die Anlage umfasst einen Granulator 10, wobei es sich in dem Ausführungsbeispiel um einen Fließbettgranulator handelt. Der grundsätzliche Aufbau eines solchen Fließbettgranulators 10 wurde bereits oben erläutert und ist zudem an sich aus dem Stand der Technik bekannt, so dass dieser Aufbau hier nicht noch einmal näher im Detail beschrieben wird. Der Granulator 10 ist hier schematisch als Anlagenteil mit einem Arbeitsraum dargestellt, in dem die Fließbettgranulation von Statten geht. Zur Erzeugung eines Fließbetts umfasst die Anlage eine erste Zufuhrleitung 11 für Fluidisierungsluft zum Granulator 10. In dieser Leitung 11 ist ein erstes Gebläse 12 angeordnet, welches die Fluidisiserungsluft zum Granulator 10 fördert.

Die Anlage umfasst weiterhin eine zweite Zufuhrleitung 13 für Atomisierungsluft zum Granulator, wobei auch in dieser Leitung ein Ventilator 14 angeordnet ist, welcher die Atomisierungsluft zum Granulator fördert. Die Atomisierungsluft dient dazu, die (hier nicht dargestellten) Sprühdüsen mit Luft zu versorgen, mittels derer die Schmelze fein zerstäubt und in den Granulator eingesprüht wird. Gegebenenfalls kann ein Wärmetauscher 15 in dieser Leitung 13 vorgesehen sein, um die Atomisierungsluft vorzuwärmen.

Weiterhin ist eine dritte Zufuhrleitung 16 für Harnstoffschmelze oder konzentrierte Harnstofflösung zum Granulator 10 vorgesehen, wobei eine Pumpe 17 in dieser dritten Zufuhrleitung 16 vorgesehen ist, um die Harnstoffschmelze oder konzentrierte Harnstofflösung zum Granulator 10 zu fördern. In den hier nicht dargestellten Sprühdüsen wird die Harnstoffschmelze oder Harnstofflösung mit der Atomisierungsluft vermischt und zu feinen Sprühtröpfchen atomisiert und in den Granulator gesprüht. Durch diesen Sprühvorgang kommt die Harnstoffschmelze oder konzentrierte Harnstofflösung mit den Granulationskeimen in Kontakt und durch Anwachsen entstehen die Granulatpartikel, wie bereits oben erläutert, die dann über wenigstens eine hier nur schematisch dargestellte Granulataustragsöffnung über die Leitung 18 in Pfeilrichtung aus dem Granulator 10 ausgetragen werden für eine weitere Behandlung. Das Abgas verlässt den Granulator 10 im oberen Bereich über die Abgasleitung 19, welche dann in der Regel in einen Abgaswäscher 20 führt, in dem das Abgas gereinigt wird. Bei der Staubwäsche des Abgases entsteht eine staubhaltige Waschlösung, welche Harnstoff enthält und mittels einer Pumpe 22 aus dem Abgaswäscher 20 abgeführt werden kann. Diese harnstoffhaltige Waschlösung kann anschließend durch Eindampfen auf konzentriert werden und als konzentrierte Harnstofflösung wieder in den Prozess zur Herstellung von Harnstoffpartikeln zurückgeführt werden und dazu beispielsweise wie durch den Pfeil 21 angedeutet in die Zufuhrleitung 16 eingespeist werden kann, die zum Granulator 10 führt.

Für die Herstellung von Düngemittelgranulat können dem Granulator 10 neben der Harnstoffschmelze oder konzentrierten Harnstofflösung weitere Bestandteile wie beispielsweise Formaldehyd zugeführt werden. Häufig verwendet man dabei zum Beispiel eine Lösung aus Formaldehyd (z.B. 60 %), Harnstoff (25 %) und Wasser (15 %) (auch als UFC 85 bezeichnet), die über die Leitung 23, die in die Leitung 16 einmündet, der Harnstoffschmelze oder konzentrierten Harnstofflösung zugemischt werden kann und dann mit dieser gemeinsam dem Granulator 10 zugeführt werden kann. Die Zumischung einer solchen formaldehydhaltigen UFC-Lösung wird hier nur beispielhaft genannt, um zu verdeutlichen, dass das Harnstoffgranulat neben Harnstoff verschiedenste weitere Bestandteile enthalten kann. Die Zumischung von Formaldehyd bzw. UFC ist somit im Rahmen des vorliegenden Verfahrens keinesfalls als erfindungsnotwendig anzusehen, sondern hat an dieser Stelle nur erläuternden beispielhaften Charakter.

Gemäß der vorliegenden Erfindung ist wenigstens eine UV-LED-Lampe 24 neben der Zufuhrleitung 16, die die Harnstoffschmelze oder konzentrierte Harnstofflösung dem Granulator 10 zuführt, angeordnet, wobei diese UV-LED-Lampe 24 UV-Strahlung ausstrahlt, welche das in der Harnstoffschmelze oder konzentrierten Harnstofflösung gelöste Ammoniak zersetzt. Diese UV-LED-Lampe 24 ist, wie sich aus der Darstellung gemäß Figur 1 entnehmen lässt, neben der Zufuhrleitung 16 in räumlicher Nähe zum Granulator 10 stromaufwärts des Granulators angeordnet, kurz bevor die Harnstoffschmelze oder konzentrierte Harnstofflösung in den Granulator 10 eingesprüht wird. Auf diese Weise wird erreicht, dass Ammoniak, welches sich bei der Herstellung und Lagerung sowie gegebenenfalls im Förderweg der Harnstoffschmelze zum Granulator bildet, zersetzt wird, bevor das Ammoniak in den Granulator gelangt, so dass es in dem dort befindlichen Prozess der Fließbettgranulation nicht mehr freigesetzt werden kann. Damit wird auch verhindert, dass das Ammoniak in das Abgas gelangt, welches aus dem Granulator 10 über die Abgasleitung 19 abgeführt wird. Weiterhin wird dadurch erreicht, dass die Reaktion zu Biuret nicht gefördert wird. Durch Zerstörung des NH₃ verschiebt sich das Reaktionsgleichgewicht in Richtung Biuret, so dass durch eine frühzeitige Ammoniakentfernung mehr Biuret entstehen würde. Bevorzugt werden die UV-Lampen nicht an der Hauptleitung sondern an den Zuführungen zu den einzelnen Schmelzedüsen angebracht.

In der Praxis sollte die Harnstofflösung auf viele Düsen aufgeteilt werden (beispielsweise bis zu 400). Von der in der Figur 1 dargestellten Hauptleitung gehen somit Einzelleitungen zu den Düsen. Die Düsen sind wiederum in Gruppen (beispielsweise bis zu 18) angeordnet. Jede Düsengruppe hat eine eigene Zuleitung. Somit besteht eine weitere Möglichkeit die UV-Lampe(n) an den einzelnen Düsenzuleitungen anzubringen. Das hat den weiteren Vorteil, dass die Lampen physikalisch unmittelbar am Granulator angebracht werden können.

Durch die Inbetriebnahme der einzelnen Düsengruppen wird die Leistung der Anlage geregelt. Somit brauchen auch nur die UV-Lampen in Betrieb genommen zu werden, wenn diese Düsengruppe benutzt wird. Dies ermöglicht eine Energieeinsparung sowie längere Haltbarkeit der UV-Lampen.

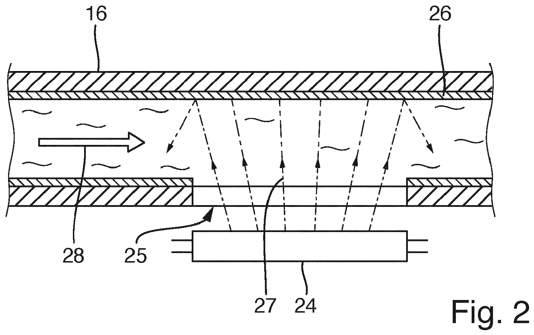

Nachfolgend wird auf Figur 2 Bezug genommen, die eine schematische vergrößerte Detailansicht der Zufuhrleitung 16 für Harnstoffschmelze im Bereich der UV-Lampe 24 im teilweisen Längsschnitt zeigt. Durch die Zufuhrleitung 16 wird in Richtung des Pfeils 28 eine Harnstoffschmelze zum Granulator transportiert. Die Zufuhrleitung 16 hat ein für UV-Strahlung 27 durchlässiges Fenster 25, durch das die von der UV-Lampe 24 abgegebene UV-Strahlung 27 in das Innere der Zufuhrleitung 16 eingestrahlt wird. Die Zufuhrleitung 16 ist vorzugsweise innenseitig mit einer die eingestrahlte UV-Strahlung 27 reflektierenden Verspiegelungsschicht 26 beschichtet, so dass die auf diese Verspiegelungsschicht treffende UV-Strahlung dort reflektiert wird und somit die UV-Strahlung in der Zufuhrleitung 16 intensiviert wird. Durch die UV-Strahlung 27 wird das in der Harnstoffschmelze enthaltene Ammoniak photokatalytisch zersetzt.

### Bezugszeichenliste

- 10: Granulator, Düngemittelgranulator
- 11: Zufuhrleitung für Fluidisierungsluft
- 12: Ventilator für Fluidisierungsluft
- 13: Zufuhrleitung für Atomisierungsluft
- 14: Ventilator für Atomisierungsluft
- 15: Wärmetauscher
- 16: Zufuhrleitung für Harnstoffschmelze
- 17: Pumpe
- 18: Leitung zum Austragen des Granulats
- 19: Abgasleitung
- 20: Abgaswäscher
- 21: Pfeil
- 22: Pumpe
- 23: Leitung für UFC
- 24: UV-Lampe
- 25: Fenster
- 26: Verspiegelungsschicht
- 27: UV-Strahlung
- 28: Pfeil

## Patentansprüche

1. Verfahren zur Herstellung eines Düngemittels, welches Harnstoff und/oder wenigstens eine Ammoniumverbindung enthält, wobei im Herstellungsprozess Ammoniak als Verunreinigung anfällt,
**dadurch gekennzeichnet, dass** das Ammoniak durch Bestrahlen mit UV-Strahlung photokatalytisch zersetzt wird und dass in einer Harnstoffschmelze oder in einer konzentrierten Harnstofflösung gebundenes oder gelöstes Ammoniak photokatalytisch zerstört wird.

2. Verfahren nach Anspruch 1, **dadurch gekennzeichnet, dass** in einem Granulationsprozess ein Düngemittelgranulat hergestellt wird.

3. Verfahren nach Anspruch 1 oder 2, **dadurch gekennzeichnet, dass** in einem Granulationsprozess ein harnstoffhaltiges Düngemittelgranulat hergestellt wird.

4. Verfahren nach Anspruch 3, **dadurch gekennzeichnet, dass** das harnstoffhaltige Düngemittelgranulat durch Fließbettgranulation hergestellt wird.

5. Verfahren nach einem der Ansprüche 1 bis 4, **dadurch gekennzeichnet, dass** in einem Abgasstrom enthaltenes Ammoniak photokatalytisch zerstört wird.

6. Verfahren nach Anspruch 1, **dadurch gekennzeichnet, dass** die Harnstoffschmelze oder konzentrierte Harnstofflösung auf dem Transportweg zu einem Düngemittelgranulator (10) (10) mit UV-Strahlung bestrahlt wird.

7. Verfahren nach Anspruch 6, **dadurch gekennzeichnet, dass** die Harnstoffschmelze oder konzentrierte Harnstofflösung in geringem räumlichen und/oder zeitlichen Abstand oder unmittelbar vor der Zugabe in den Düngemittelgranulator (10) mit UV-Strahlung bestrahlt wird.

8. Verfahren nach einem der Ansprüche 1 bis 7, **dadurch gekennzeichnet, dass** die Bestrahlung mit UV-Strahlung einer Wellenlänge im Bereich von 170 nm bis 350 nm, insbesondere im Bereich von 170 nm bis 315 nm, besonders bevorzugt im Bereich von 185 nm bis 254 nm erfolgt.

9. Verfahren nach einem der Ansprüche 1 bis 8, **dadurch gekennzeichnet, dass** das Ammoniak photokatalytisch zumindest überwiegend zu Stickstoff und Wasser zersetzt wird.

10. Verfahren nach einem der Ansprüche 1 bis 9, **dadurch gekennzeichnet, dass** die Bestrahlung mittels einer UV-Lampenanordnung, vorzugsweise einer UV-LED-Lampe (24) erfolgt, welche in räumlicher Nähe zu wenigstens einer Zufuhrleitung angeordnet ist, über die eine Harnstoffschmelze oder eine konzentrierte Harnstofflösung zum Düngemittelgranulator (10) geleitet wird.

11. Vorrichtung zur Herstellung von Düngemittelpartikeln, welche Harnstoff und/oder wenigstens eine Ammoniumverbindung enthalten, insbesondere von Düngemittelgranulat, vorzugsweise nach einem Verfahren gemäß einem der Ansprüche 1 bis 10, umfassend einen Anlagenteil mit einem Arbeitsraum, insbesondere einen Düngemittelgranulator (10), in dem die Herstellung der Düngemittelpartikel erfolgt und mindestens eine Zufuhrleitung (16) zu dem Anlagenteil, mittels derer eine Harnstoffschmelze oder eine konzentrierte Harnstofflösung zu dem Anlagenteil leitbar ist, **dadurch gekennzeichnet, dass** wenigstens eine UV-Lampenanordnung (24) in räumlicher Nähe zu wenigstens einer Zufuhrleitung angeordnet ist, mittels derer die in der Zufuhrleitung (16) strömende Harnstoffschmelze oder konzentrierte Harnstofflösung mit UV-Strahlung bestrahlt wird.

12. Vorrichtung nach Anspruch 11, **dadurch gekennzeichnet, dass** die UV-Lampenanordnung mindestens eine UV-LED-Lampe (24) umfasst.

13. Vorrichtung nach einem der Ansprüche 11 oder 12, **dadurch gekennzeichnet, dass** die Zufuhrleitung (16) wenigstens in dem Bereich, in dem die UV-Lampenanordnung (24) angeordnet ist, für UV-Strahlung durchlässig ausgebildet ist.

14. Vorrichtung nach einem der Ansprüche 11 bis 13, **dadurch gekennzeichnet, dass** die Zufuhrleitung (16) in dem Bereich, in dem die UV-Lampenanordnung (24) angeordnet ist, ein für UV-Strahlung durchlässiges Fenster (25) aufweist.

## Claims

1. A method for producing a fertilizer which comprises urea and/or at least one ammonium compound, wherein ammonia is obtained as an impurity in the production process,
**characterized in that** the ammonia is decomposed photocatalytically by irradiation with UV radiation and that ammonia bound or dissolved in a urea melt or in a concentrated urea solution is destroyed photocatalytically.

2. The method as claimed in claim 1, **characterized in that** fertilizer granules are produced in a granulation process.

3. The method as claimed in claim 1 or 2, **characterized in that** urea-containing fertilizer granules are produced in a granulation process.

4. The method as claimed in claim 3, **characterized in that** urea-containing fertilizer granules are produced by fluidized bed granulation.

5. The method as claimed in any of claims 1 to 4, **characterized in that** ammonia contained in an offgas stream is destroyed photocatalytically.

6. The method as claimed in claim 1, **characterized in that** the urea melt or concentrated urea solution is irradiated with UV radiation on the transport path to a fertilizer granulator (10)(10).

7. The method as claimed in claim 6, **characterized in that** the urea melt or concentrated urea solution is irradiated with UV radiation at a low spatial and/or temporal distance or immediately before addition to the fertilizer granulator (10).

8. Method according to any of claims 1 to 7, **characterized in that** the irradiation takes place with UV radiation of a wavelength in the range from 170 nm to 350 nm, more particularly in the range from 170 nm to 315 nm, very preferably in the range from 185 nm to 254 nm.

9. Method according to any of claims 1 to 8, **characterized in that** the ammonia is photocatalytically decomposed at least predominantly into nitrogen and water.

10. The method according to any of claims 1 to 9, **characterized in that** the irradiation takes place by means of a UV lamp arrangement, preferably a UV-LED lamp (24), which is arranged in spatial vicinity to at least one supply line via which a urea melt or a concentrated urea solution is passed to the fertilizer granulator (10).

11. An apparatus for producing fertilizer particles which comprise urea and/or at least one ammonium compound, more particularly fertilizer granules, preferably by a method as claimed in any of claims 1 to 10, comprising a plant section having a working space, in particular a fertilizer granulator (10), in which the fertilizer particles are produced, and at least one supply line (16) to the plant section, by means of which a urea melt or a concentrated urea solution can be passed to the plant section, **characterized in that** at least one UV lamp arrangement (24) is arranged in spatial vicinity to at least one supply line, by means of which the urea melt or concentrated urea solution flowing in the supply line (16) is irradiated with UV radiation.

12. The apparatus as claimed in claim 11, **characterized in that** the UV lamp arrangement comprises at least one UV-LED lamp (24).

13. The apparatus as claimed in either of claims 11 and 12, **characterized in that** at least in the region in which the UV lamp arrangement (24) is arranged, the supply line (16) is configured to be transmissive for UV radiation.

14. The apparatus as claimed in any of claims 11 to 13, **characterized in that** in the region in which the UV lamp arrangement (24) is arranged, the supply line (16) has a window (25) which is transmissive for UV radiation.

## Revendications

1. Méthode de production d'un engrais comprenant de l'urée et/ou au moins un composé d'ammonium, l'ammoniac étant obtenu en tant qu'impureté dans le processus de production,
**caractérisé par le fait que l'**ammoniac est décomposé par photocatalyse sous l'effet d'un rayonnement UV et que l'ammoniac lié ou dissous dans un mélange d'urée ou dans une solution d'urée concentrée est détruit par photocatalyse.

2. La méthode selon la revendication 1, **caractérisée par le fait que les** granulés d'engrais sont produits par un processus de granulation.

3. Méthode selon la revendication 1 ou 2, **caractérisée par le fait que** les granulés d'engrais contenant de l'urée sont produits dans un processus de granulation.

4. Méthode selon la revendication 3, **caractérisée par le fait que** les granulés d'engrais contenant de l'urée sont produits par granulation en lit fluidisé.

5. Méthode selon l'une des revendications 1 à 4, **caractérisée par la** destruction photocatalytique de l'ammoniac contenu dans un flux d'effluents gazeux.

6. La méthode selon la revendication 1, **caractérisée par le fait que l'**urée fondue ou la solution d'urée concentrée est irradiée par un rayonnement UV sur le trajet de transport vers un granulateur d'engrais (10) (10) .

7. La méthode selon la revendication 6, **caractérisée par le fait que l'**urée fondue ou la solution d'urée concentrée est irradiée par un rayonnement UV à une faible distance spatiale et/ou temporelle ou immédiatement avant d'être ajoutée au granulateur d'engrais (10).

8. Procédé selon l'une des revendications 1 à 7, **caractérisé par le fait que** l'irradiation a lieu avec un rayonnement UV d'une longueur d'onde comprise entre 170 nm et 350 nm, plus particulièrement entre 170 nm et 315 nm, très préférentiellement entre 185 nm et 254 nm.

9. Procédé selon l'une des revendications 1 à 8, **caractérisé par le fait que l**'ammoniac est décomposé par photocatalyse au moins principalement en azote et en eau.

10. La méthode selon l'une des revendications 1 à 9, **caractérisée par le fait que** l'irradiation a lieu au moyen d'une lampe UV, de préférence une lampe UV-LED (24), qui est disposée à proximité spatiale d'au moins une conduite d'alimentation par laquelle une fusion d'urée ou une solution d'urée concentrée est acheminée vers le granulateur d'engrais (10).

11. Appareil pour la production de particules d'engrais comprenant de l'urée et/ou au moins un composé d'ammonium, plus particulièrement des granulés d'engrais, de préférence par un procédé selon l'une quelconque des revendications 1 à 10, comprenant une section d'installation ayant un espace de travail, en particulier un granulateur d'engrais (10), dans lequel les particules d'engrais sont produites, et au moins une conduite d'alimentation (16) de la section d'installation, par laquelle une solution d'urée fondue ou une solution d'urée concentrée peut être acheminée vers la section d'installation, **caractérisée par le fait qu'**au moins un dispositif de lampe UV (24) est disposé à proximité spatiale d'au moins une conduite d'alimentation, par lequel la solution d'urée fondue ou la solution d'urée concentrée circulant dans la conduite d'alimentation (16) est irradiée par un rayonnement UV.

12. l'appareil selon la revendication 11, **caractérisé par le fait que** l'agencement de lampes UV comprend au moins une lampe UV-LED (24).

13. l'appareil selon l'une des revendications 11 et 12, **caractérisé par le fait qu'au** moins dans la région dans laquelle la lampe UV (24) est disposée, la conduite d'alimentation (16) est configurée pour être transmissive pour le rayonnement UV.

14. l'appareil selon l'une des revendications 11 à 13, **caractérisé par le fait que** dans la zone où la lampe UV (24) est disposée, la conduite d'alimentation (16) comporte une fenêtre (25) qui transmet le rayonnement UV.
